(19) Europäisches Patentamt
European Patent Office
Office européen des brevets

(11) **EP 2 154 637 A1**

(12) **EUROPEAN PATENT APPLICATION**
published in accordance with Art. 153(4) EPC

(43) Date of publication:
**17.02.2010 Bulletin 2010/07**

(51) Int Cl.:
*G06N 3/00* (2006.01)     *G06T 11/80* (2006.01)
*G09B 5/06* (2006.01)     *H04N 5/91* (2006.01)

(21) Application number: **08764783.0**

(22) Date of filing: **28.05.2008**

(86) International application number:
**PCT/JP2008/059767**

(87) International publication number:
**WO 2008/146827 (04.12.2008 Gazette 2008/49)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **28.05.2007 JP 2007139993**

(71) Applicant: **Sony Corporation**
**Tokyo 108-0075 (JP)**

(72) Inventors:
• **ANDO, Kazutaka**
**Tokyo 108-0075 (JP)**
• **KONDO, Tetsujiro**
**Tokyo 108-0075 (JP)**

(74) Representative: **Beder, Jens**
**Mitscherlich & Partner**
**Patent- und Rechtsanwälte**
**Sonnenstraße 33**
**D-80331 München (DE)**

(54) **LEARNING DEVICE, LEARNING METHOD, INFORMATION PROCESSING DEVICE, INFORMATION PROCESSING METHOD, AND PROGRAM**

(57) The present invention relates to a learning apparatus, a learning method, an information modification apparatus, an information modification method, and a program in which information reflecting the feature of a user operation can be output.

A content modification unit 24 modifies an input image in accordance with a user operation, and generates modification information necessary for outputting a resulting output image. A modification information recording unit 28 accumulates a plurality of pieces of modification information corresponding to the number of times an operation is performed by a user. A learning unit 30 uses the plurality of pieces of modification information accumulated the modification information recording unit 28 as student data, and performs learning using teacher data acquired by a teacher data acquisition unit 29 to calculate a prediction coefficient representing the feature of the user operation, and stores the prediction coefficient in a user algorithm recording unit 31. The present invention can be applied to, for example, an image processing apparatus.

FIG. 2

**EP 2 154 637 A1**

**Description**

Technical Field

The present invention relates to a learning apparatus, a learning method, an information modification apparatus, an information modification method, and a program, and more specifically to a learning apparatus, a learning method, an information modification apparatus, an information modification method, and a program in which information reflecting the feature of a user operation can be output.

Background Art

Conventionally, for example, there is an image processing apparatus that modifies an input image in accordance with a user operation and that outputs a resulting output image. The image processing apparatus has a recording mode for recording modification information necessary for modifying an input image in accordance with a user operation, and a reproduction mode for modifying the input image on the basis of the recorded modification information and outputting a resulting output image.

For example, in the recording mode, when a user performs the operation of enlarging and displaying a subject in an input image, in accordance with this operation, the image processing apparatus outputs an output image in which the subject has been enlarged, and in conjunction therewith records, as modification information, information indicating a region corresponding to the output image on the input image. Then, in the reproduction mode, the image processing apparatus extracts the region indicated by the recorded modification information from the input image, and outputs an output image in which the subject has been enlarged.

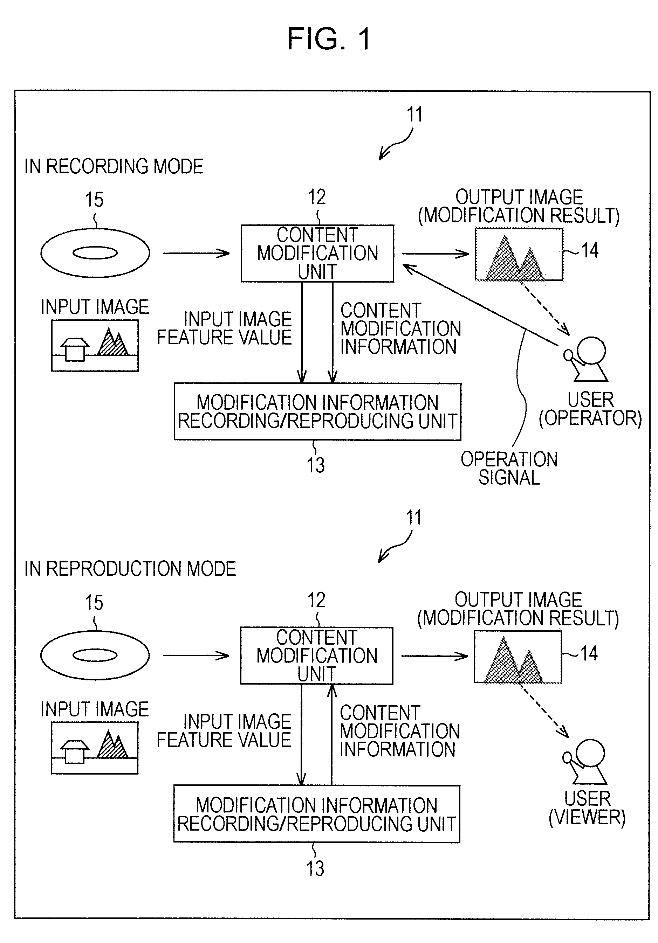

Fig. 1 is a block diagram illustrating the configuration of an example of the image processing apparatus.

In Fig. 1, an image processing apparatus 11 is configured using a content modification unit 12, a modification information recording/reproducing unit 13, and a display unit 14. Furthermore, the image processing apparatus 11 which is in the recording mode is illustrated in the upper part of Fig. 1, and the image processing apparatus 11 which is in the reproduction mode is illustrated in the lower part of Fig. 1.

An input image which is read by a drive (not illustrated) from a DVD (Digital Versatile Disc) 15 having images recorded thereon is input (supplied) to the content modification unit 12. The content modification unit 12 modifies the input image, and outputs a resulting output image to the display unit 14.

For example, in the recording mode, when a user views the output image output on the display unit 14 and operates a remote commander (not illustrated) or the like so as to output a desired output image, an operation signal corresponding to the user operation is supplied to the content modification unit 12. Then, the content modification unit 12 modifies the input image in accordance with the user operation, and outputs an output image to the display unit 14.

Furthermore, for example, the content modification unit 12 generates, as modification information, information indicating a region corresponding to the output image on the input image, and supplies this modification information to the modification information recording/reproducing unit 13. In addition, the content modification unit 12 supplies a feature value that is information for specifying a frame to be modified in the input image to the modification information recording/ reproducing unit 13. The modification information recording/reproducing unit 13 records the modification information and feature value supplied from the content modification unit 12 in association with each other.

On the other hand, in the reproduction mode, the content modification unit 12 supplies a feature value for specifying a frame to be reproduced in the input image to the modification information recording/reproducing unit 13, and the modification information recording/reproducing unit 13 supplies modification information associated with the feature value supplied from the content modification unit 12 to the content modification unit 12. Then, the content modification unit 12 modifies the input image on the basis of the modification information supplied from the modification information recording/reproducing unit 13, and outputs an output image to the display unit 14.

In this manner, in the image processing apparatus 11, modification information corresponding to a user operation is recorded in the recording mode. In the reproduction mode, an input image is modified on the basis of this modification information, and an output image corresponding to the user operation is output.

Then, a user views this output image. If the user is not satisfied with this output image, he/she sets the image processing apparatus 11 to the recording mode, and performs again the operation for outputting a desired output image, thereby updating the modification information. Then, in the reproduction mode, the image processing apparatus 11 outputs an output image that is modified on the basis of the new modification information. In this manner, a user repeatedly performs the operation for outputting a desired output image. Consequently, the image processing apparatus 11 can output an output image that the user is satisfied with.

Furthermore, for example, Patent Document 1 discloses an apparatus that, on the occasion of reproducing a high-definition image recorded on a recording medium, performs image processing for extracting a portion of the high-definition image on the basis of a parameter generated in accordance with a user operation and outputs an image extracted from the high-definition image on a display.

Patent Document 1: Japanese Unexamined Patent Application Publication No. 2006-270187

Disclosure of Invention

Technical Problem

Incidentally, in the image processing apparatus 11, in some cases, a user may repeatedly perform the operation a large number of times until an output image that the user is satisfied with has been output, and it has been demanded that an output image that reflects the user's intension and that the user is satisfied with, that is, an output image reflecting the feature of the user operation, be output with a small number of operations.

The present invention has been made in view of such a situation, and is intended to ensure that, for example, an output image reflecting the feature of a user operation can be output.

Technical Solution

A learning apparatus in a first aspect of the present invention is a learning apparatus that learns a feature of an operation of a user on the basis of a history of a plurality of operations performed by the user, including modifying means for modifying predetermined input information in accordance with the operation of the user; generating means for generating modification information necessary for outputting output information obtained as a result of the predetermined input information having been modified by the modifying means; accumulating means for accumulating a plurality of pieces of the modification information corresponding to the number of times the user performs the operation; and learning means for performing learning using the plurality of pieces of modification information accumulated in the accumulating means as student data which serves as students of learning and using predetermined information obtained on the basis of the predetermined input information as teacher data which serves as a teacher of learning, thereby calculating a prediction coefficient representing the feature of the operation of the user.

A learning method or a program in the first aspect of the present invention is a learning method for learning a feature of an operation of a user on the basis of a history of a plurality of operations performed by the user, or a program for causing execution by a computer of a learning apparatus that learns a feature of an operation of a user on the basis of a history of a plurality of operations performed by the user, including the steps of modifying predetermined input information in accordance with the operation of the user; generating modification information necessary for outputting output information obtained as a result of the predetermined input information having been modified; accumulating in accumulating means a plurality of pieces of the modification information corresponding to the number of times the user performs the operation; and performing learning using the plurality of pieces of modification information accumulated in the accumulating means as student data which serves as students of learning and using predetermined information obtained on the basis of the predetermined input information as teacher data which serves as a teacher of learning, thereby calculating a prediction coefficient representing the feature of the operation of the user.

In the first aspect of the present invention, predetermined input information is modified in accordance with a user operation, modification information necessary for outputting resulting output information is generated, and a plurality of pieces of modification information corresponding to the number of times the user performs the operation are accumulated in accumulating means. Then, learning is performed using the plurality of pieces of modification information accumulated in the accumulating means as student data which serves as students of learning and using predetermined information obtained on the basis of the predetermined input information as teacher data which serves as a teacher of learning, thereby calculating a prediction coefficient representing the feature of the user operation.

An information modification apparatus in a second aspect of the present invention is an information modification apparatus that modifies predetermined input information and that outputs resulting output information, including prediction coefficient storage means for storing a prediction coefficient obtained by learning performed in advance; modifying means for modifying the predetermined input information in accordance with an operation of the user; generating means for generating modification information necessary for outputting the output information obtained as a result of the predetermined input information having been modified by the modifying means; accumulating means for accumulating a plurality of pieces of the modification information corresponding to the number of times the user performs the operation; and arithmetic operation means for performing a predetermined arithmetic operation using the prediction coefficient stored in the prediction coefficient storage means and the plurality of pieces of modification information accumulated in the accumulating means to calculate modification information reflecting a feature of the operation of the user, wherein the modifying means modifies the predetermined input information on the basis of the modification information reflecting a feature of the operation of the user.

An information modification method or a program in the second aspect of the present invention is an information modification method for an information modification apparatus that modifies predetermined input information and that outputs resulting output information, or a program for causing execution by a computer of an information modification apparatus that modifies predetermined input information and that outputs resulting output information, wherein the information modification apparatus includes prediction coefficient storage means for storing a prediction coefficient obtained by learning performed in advance, and accumulating means for accumulating information, including the steps of modifying the predetermined input information in accordance with an operation of the user; generating modification information necessary for outputting the output information obtained as a result of the predetermined input information having been modified; accumulating in the accumulating means a plurality of pieces of the modification information corresponding to the number of times the user performs the operation; performing a predetermined arithmetic operation using the prediction coefficient stored in the prediction coefficient storage means and the plurality of pieces of modification information accumulated in the accumulating means to calculate modification information reflecting a feature of the operation of the user; and modifying the predetermined input information on the basis of the modification information reflecting a feature of the operation of the user.

In the second aspect of the present invention, an information modification apparatus includes prediction coefficient storage means for storing a prediction coefficient obtained by learning performed in advance, and accumulating means for accumulating information. Furthermore, modification information necessary for modifying predetermined input information in accordance with a user operation and outputting output information is generated, and a plurality of pieces of modification information corresponding to the number of times the user performs the operation are accumulated in the accumulating means. Then, a predetermined arithmetic operation is performed using the prediction coefficient stored in the prediction coefficient storage means and the plurality of pieces of modification information accumulated in the accumulating means to calculate modification information reflecting the feature of the user operation, and the predetermined input information is modified on the basis of the modification information reflecting the feature of the user operation.

Advantageous Effects

According to the first and second aspects of the present invention, information reflecting the feature of a user operation can be output.

Brief Description of Drawings

[Fig. 1] Fig. 1 is a block diagram illustrating the configuration of an example of a conventional image processing apparatus.
[Fig. 2] Fig. 2 is a block diagram illustrating an example configuration of an embodiment of an image processing apparatus to which the present invention is applied.
[Fig. 3] Fig. 3 is a flowchart explaining a process performed in an image processing apparatus 21.
[Fig. 4] Fig. 4 is a diagram explaining the relationship between student data and teacher data used in a learning process performed in the image processing apparatus 21.
[Fig. 5] Fig. 5 is a diagram illustrating student data obtained as a result of an experiment and teacher data of content for use in learning thereof.
[Fig. 6] Fig. 6 is a diagram illustrating the relationship between the position in the horizontal direction and the position in the vertical direction of student data at a certain time.
[Fig. 7] Fig. 7 is a block diagram illustrating an example configuration of a learning unit 30.
[Fig. 8] Fig. 8 is a flowchart explaining a learning process.
[Fig. 9] Fig. 9 is a flowchart explaining a learning result application process.
[Fig. 10] Fig. 10 is a flowchart explaining a modification information recording process.
[Fig. 11] Fig. 11 is a block diagram illustrating an example configuration of an embodiment of an information processing apparatus to which the present invention is applied.
[Fig. 12] Fig. 12 is a block diagram illustrating an example configuration of an embodiment of an information processing apparatus to which the present invention is applied.
[Fig. 13] Fig. 13 is a block diagram illustrating an example configuration of an embodiment of an information processing apparatus to which the present invention is applied.
[Fig. 14] Fig. 14 is a block diagram illustrating an example of the configuration of a personal computer.

Explanation of Reference Numerals

21 image processing apparatus, 22 input unit, 23 feature value extraction unit, 24 content modification unit, 25 modification information recording/reproducing unit, 26 output unit, 27 user operation input unit, 28 modification information recording unit, 29 teacher data acquisition unit, 30 learning unit, 31 user algorithm recording unit, 32 medium, 33 and 34 portable medium, 41 class classification unit 41, 42 prediction processing unit, 51 information processing apparatus, 52 device control unit, 53 control target device

Best Mode for Carrying Out the Invention

Specific embodiments to which the present invention is applied will be explained in detail hereinafter with reference to the drawings.

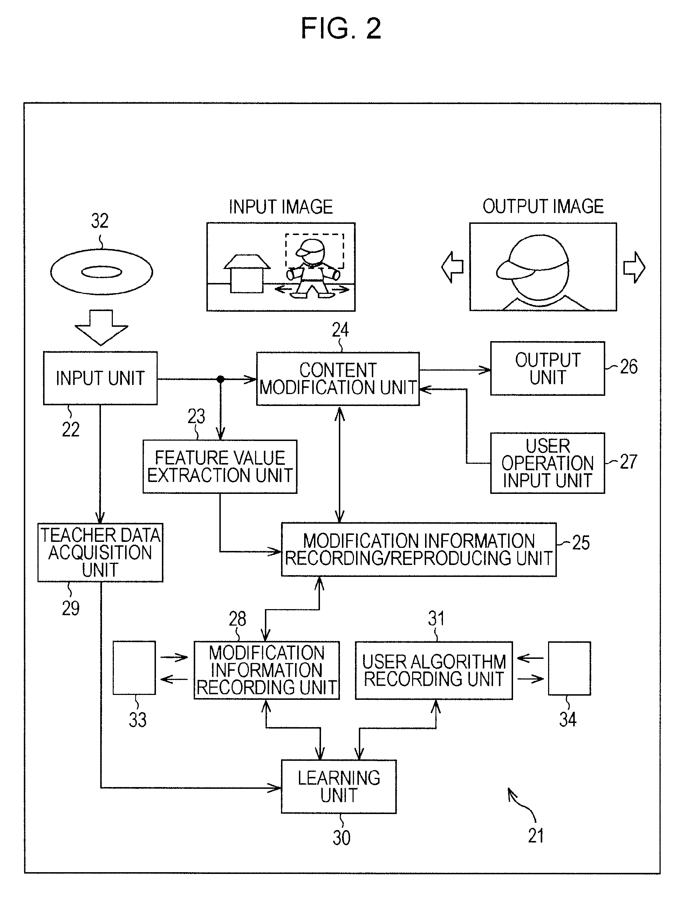

Fig. 2 is a block diagram illustrating an example configuration of an embodiment of an image processing apparatus to which the present invention is applied.

In Fig. 2, the image processing apparatus 21 is configured using an input unit 22, a feature value extraction unit 23, a content modification unit 24, a modification information recording/reproducing unit 25, an output unit 26, a user operation input unit 27, a modification information recording unit 28, a teacher data acquisition unit 29, a learning unit 30, and a user algorithm recording unit 31.

A medium 32 on which content including video, audio, and the like is recorded, such as a DVD (Digital Versatile Disc), is placed in the input unit 22. Then, the input unit 22 reads the content recorded on the medium 32, and supplies (inputs) an image of the content (hereinafter appropriately referred to as an input image) to the feature value extraction unit 23 and the content modification unit 24, for example, frame-by-frame.

The feature value extraction unit 23 extracts, from the input image, a feature value that is information for specifying each frame of the input image supplied from the input unit 22.

The content modification unit 24 modifies the input image supplied from the input unit 22, and outputs a resulting output image to the output unit 26.

For example, an operation signal corresponding to a user operation is supplied to the content modification unit 24 from the user operation input unit 27. The content modification unit 24 modifies the input image supplied from the input unit 22 in accordance with the operation signal from the user operation input unit 27, and acquires an output image. At this time, the content modification unit 24 generates modification information that is information corresponding to the user operation for the input image and that is information necessary for acquiring an output image, for example, information indicating the center position and size of a region corresponding to the output image on the input image (in Fig. 2, a region surrounded by broken lines on the input image), for each frame of the input image, and supplies the modification information to the modification information recording/reproducing unit 25.

Furthermore, the content modification unit 24 requests the modification information recording/reproducing unit 25 to send modification information corresponding to an input image to be reproduced. When this modification information is supplied from the modification information recording/reproducing unit 25, the content modification unit 24 modifies the input image on the basis of the modification information from the modification information recording/reproducing unit 25, and supplies a resulting output image to the output unit 26.

When a feature value of the input image is supplied from the feature value extraction unit 23 and modification information corresponding to a user operation for the input image is also supplied from the content modification unit 24, the modification information recording/reproducing unit 25 associates the feature value and the modification information with each other for each frame of the input image, and supplies the feature value and the modification information to the modification information recording unit 28.

Furthermore, when a feature value of the input image is supplied from the feature value extraction unit 23 and in conjunction therewith modification information corresponding to this input image is requested from the modification information recording/reproducing unit 25, the modification information recording/reproducing unit 25 reads the modification information, which is stored in association with the feature value from the feature value extraction unit 23, from the modification information recording unit 28, and supplies the modification information to the content modification unit 24.

The output unit 26 is configured using, for example, a display such as a CRT (Cathode Ray Tube) or an LCD (Liquid Crystal Display), and displays the output image supplied from the content modification unit 24.

The user operation input unit 27 is configured using a switch button (not illustrated) or the like, and is operated by a user to supply an operation signal corresponding to a user operation to the content modification unit 24.

The modification information recording unit 28 records the feature value and modification information supplied from the modification information recording/reproducing unit 25 in association with each other. Note that the modification information recording unit 28 can output the feature value and modification information recorded thereon to a portable medium 33 for recording. Furthermore, the modification information recording unit 28 can read, from the portable medium 33 on which a feature value and modification information acquired by another apparatus are recorded in association with each other, the feature value and the modification information and can record them.

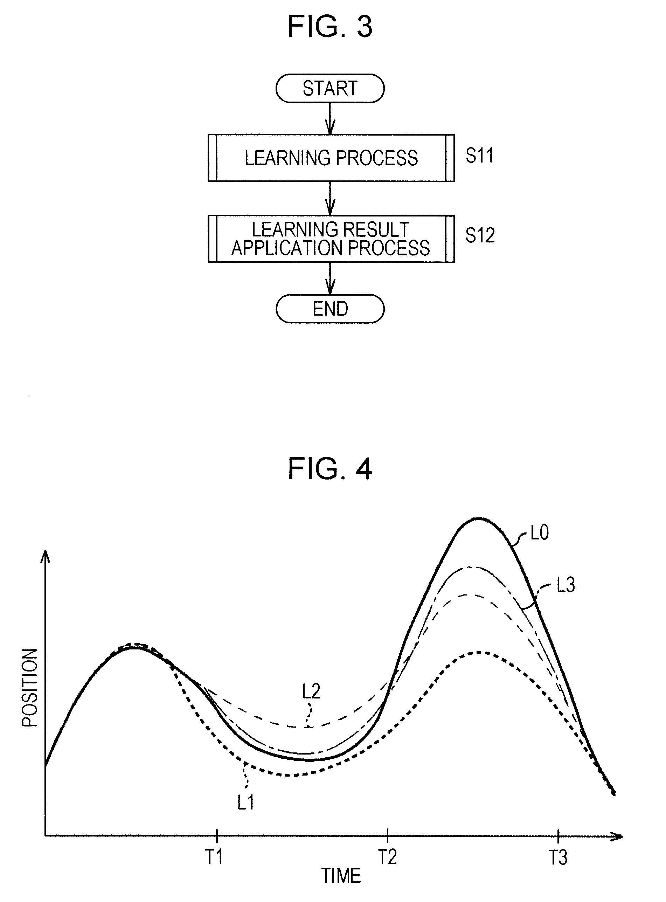

As explained below with reference to Fig. 4, the teacher data acquisition unit 29 reads teacher data for use in learning from the medium 32 on which content for use in learning is recorded, and supplies the teacher data to the learning unit 30.

The learning unit 30 performs a predetermined arithmetic operation using the modification information stored in the modification information recording unit 28 as student data for use in learning and using the teacher data for use in learning supplied from the teacher data acquisition unit 29, thereby performing a learning process that is a process for calculating a prediction coefficient for generating modification information (hereinafter appropriately referred to as user-specific modification information) for outputting an output image reflecting the feature of the user operation. The learning unit 30 supplies a prediction coefficient (user algorithm) obtained as a result of the learning process to the user algorithm recording unit 31 for storage.

Furthermore, the learning unit 30 performs a predetermined arithmetic operation using the modification information stored in the modification information recording unit 28 and the prediction coefficient acquired in the learning process, thereby performing a process for generating user-specific modification information. The learning unit 30 supplies the user-specific modification information to the modification information recording unit 28 for storage.

The user algorithm recording unit 31 records the prediction coefficient supplied from the learning unit 30. Note that the user algorithm recording unit 31 can output the prediction coefficient recorded thereon to a portable medium 34 for recording. Furthermore, the user algorithm recording unit 31 can read, from the portable medium 34 on which a prediction coefficient obtained as a result of a learning process having been performed in another apparatus is recorded, this prediction coefficient and can record it.

In the image processing apparatus 21 configured as above, for example, a prediction coefficient obtained as a result of learning having been performed using content for use in learning is recorded on the user algorithm recording unit 31. Furthermore, user-specific modification information is generated using modification information obtained in accordance with a user operation for an image of arbitrary content and the prediction coefficient recorded on the user algorithm recording unit 31, and an output image that is modified on the basis of this modification information is output.

Next, Fig. 3 is a flowchart explaining a process performed in the image processing apparatus 21 of Fig. 2.

The process is initiated by performing an operation for reproducing content for use in learning, for example, when a user purchases the image processing apparatus 21 or at any other time. In step S11, a learning process is performed. After the processing of the learning process, in step S12, a learning result application process is performed.

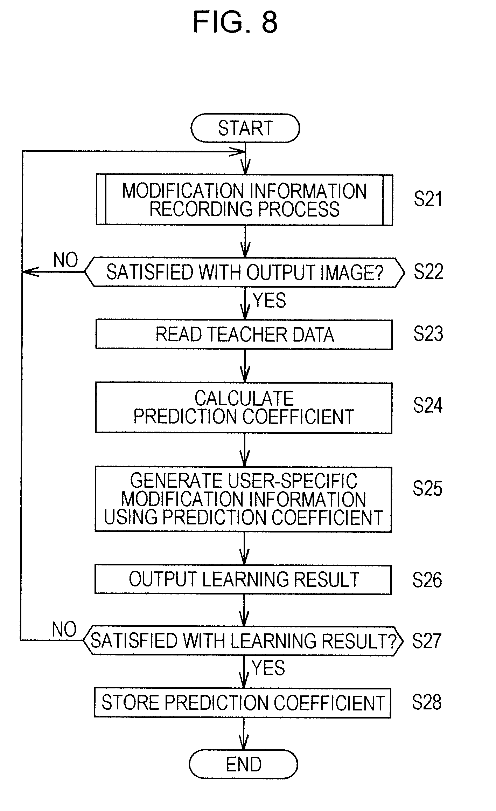

In the learning process, on the basis of a user operation for an image of the content for use in learning, the image processing apparatus 21 acquires, as a learning result, a prediction coefficient for generating modification information reflecting the user operation. Note that the learning process will be explained with reference to a flowchart of Fig. 8 described below.

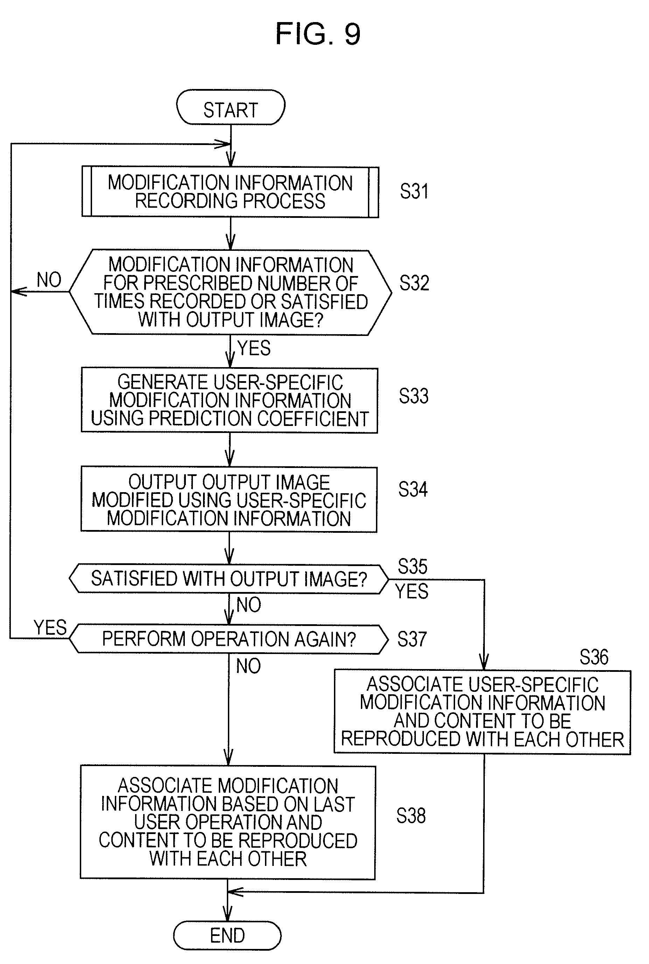

In the learning result application process, the image processing apparatus 21 generates user-specific modification information using modification information corresponding to the operation performed on an image of arbitrary content by the user and the prediction coefficient that is a learning result obtained as a result of the learning process in step S11, and outputs an output image that is modified on the basis of this modification information. Note that the learning result application process will be explained with reference to a flowchart of Fig. 9 described below.

Here, the relationship between student data and teacher data that are used in the learning process performed in the mage processing apparatus 21 will be explained with reference to Fig. 4.

Note that an example in which the input image as illustrated in Fig. 2, for example, an image in which the photographed subject is moving horizontally, is used as an image of the content for use in learning will be explained. In the learning process using an image of such content for use in learning, for example, the coordinate of the center of the subject that is moving, which is a coordinate on the input image, is used as teacher data. Furthermore, the coordinate of the center of a region corresponding to an output image that is shifted in accordance with a user operation (for example, the region surrounded by the broken lines on the input image in Fig. 2), which is a coordinate on the input image, is used as student data.

In Fig. 4, the abscissa indicates the lapse of time which is measured from left to right, and the ordinate indicates the position (coordinate) in the horizontal direction on an input screen.

In Fig. 4, teacher data that is read from the content for use in learning and three pieces of student data that are obtained when a user repeats the operation three times for an image of content for use in learning are illustrated.

That is, a locus L0 corresponds to the teacher data, and represents the locus traced by the coordinate of the center of the subject. Loci L1 to L3 correspond to the student data, and represent the loci traced by the coordinates of the center of regions corresponding to output images. Furthermore, the locus L1 corresponds to the student data obtained by the first operation of the user, the locus L2 corresponds to the student data obtained by the second operation of the user, and the locus L3 corresponds to the student data obtained by the third operation of the user.

In general, each time a user repeats the operation, an output image becomes more similar to an image intended by the user. Therefore, for example, as illustrated in Fig. 4, in a period from time T1 to time T2, since the locus L3 is between the loci L1 and L2, it is considered that the position of the center of the output image intended by the user is located between the loci L1 and L2. Furthermore, in a period from time T2 to time T3, since the locus L3 is above the locus L2 which is above the locus L1, it is considered that the position of the center of the output image intended by the user is located above the locus L3.

That is, as illustrated in Fig. 4, the position of the center of the output image intended by the user approaches to the locus L0 as the user repeats the operation. Therefore, a learning process using learning data obtained by repeating the operation by the user and teacher data can be performed to calculate a prediction coefficient capable of determining the position of the center of the output image intended by the user.

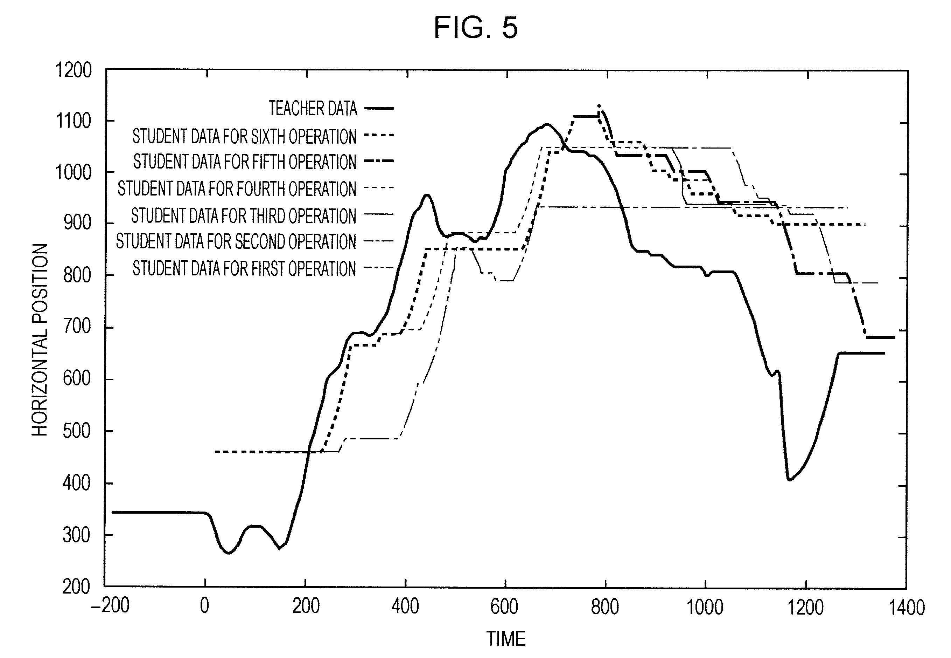

Next, Fig. 5 is a diagram illustrating student data obtained as a result of an experiment having been performed using the content for use in learning as explained in Fig. 4 and teacher data of this content for use in learning.

In Fig. 5, six pieces of student data that are obtained when a user repeats the operation six times for an image of content for use in learning. Furthermore, in Fig. 5, the lower side of the ordinate corresponds to the left side of the input screen, and the upper side of the ordinate corresponds to the right side of the input screen.

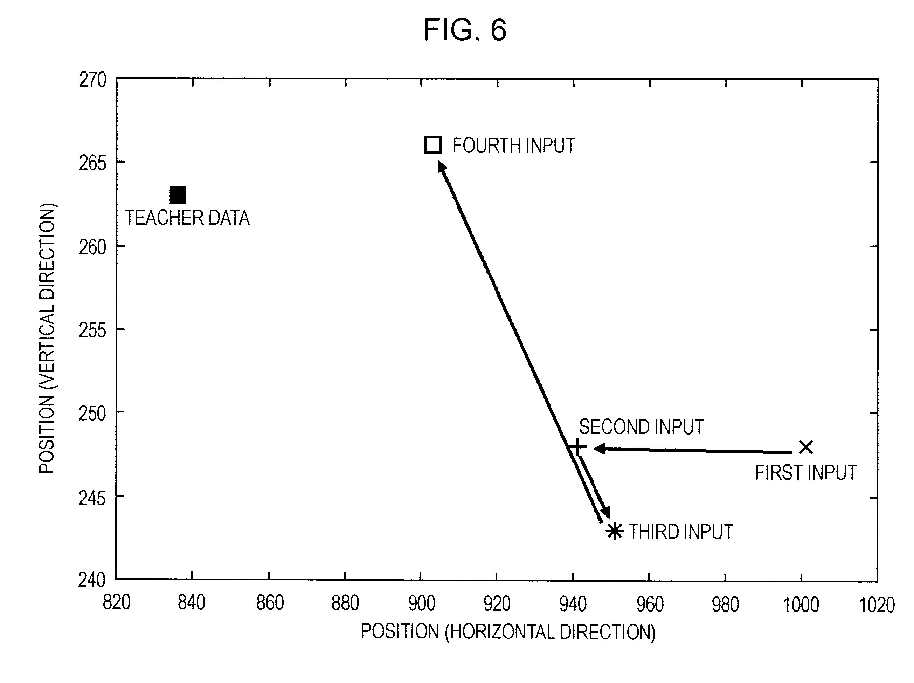

Next, Fig. 6 is a diagram illustrating the relationship between the position in the horizontal direction and the position in the vertical direction of student data at a certain time (frame) in Fig. 5.

In Fig. 6, four pieces of student data that are obtained when a user repeats the operation four times for an image of content for use in learning.

As illustrated in Figs. 5 and 6, it can be understood that there is a tendency that student data approaches to teacher data as the user repeats the operation.

In the learning unit 30 of Fig. 2, a prediction coefficient for generating user-specific modification information is calculated using such teacher data and student data.

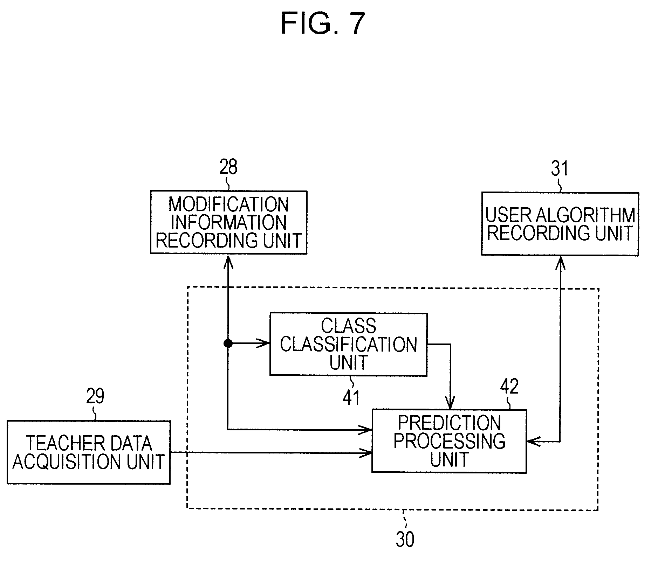

Next, Fig. 7 is a block diagram illustrating an example configuration of the learning unit 30 of Fig. 2.

In Fig. 7, the learning unit 30 is configured using a class classification unit 41 and a prediction processing unit 42.

The class classification unit 41 reads the modification information recorded on the modification information recording unit 28, calculates a class number for classifying the modification information, and supplies the class number to the prediction processing unit 42.

The class classification unit 41 sorts the modification information in accordance with the values thereof, and performs a predetermined arithmetic operation in the sorted order to calculate a class number.

An example in which a class number is calculated using, as modification information, for example, as explained with reference to Fig. 4, modification information that is obtained when a user performs the operation four times (for example, when a user performs the operation four times or more, modification information that is obtained from the recent four operations) using the coordinate of the center of a region corresponding to an output image that is shifted in accordance with a user operation will be explained.

It is assumed that, at a certain time (frame), the coordinate obtained by the first operation of the user was $A_0$, the coordinate obtained by the second operation of the user was $A_1$, the coordinate obtained by the third operation of the user was $A_2$, and the coordinate obtained by the fourth operation of the user was $A_3$. Then, it is assumed that these coordinates were sorted in accordance with the magnitudes thereof, resulting in the operation history order of the $(a_0)$-th data, the $(a_1)$-th data, the $(a_2)$-th data, and the $(a_3)$-th data. In this case, a class number C is determined according to the following Equation (1).

[Math. 1]

$$C = (a_0 - 1)4^3 + (a_1 - 1)4^2 + (a_2 - 1)4^1 + (a_3 - 1)4^0$$

$$\dots \ (1)$$

Specifically, it is assumed that, at a certain time (frame), the coordinate obtained by the first operation of the user was 824, the coordinate obtained by the second operation of the user was 756, the coordinate obtained by the third operation of the user was 540, and the coordinate obtained by the fourth operation of the user was 493. In this case, these coordinates are sorted in accordance with the magnitudes thereof, resulting in the operation history order of $a_0$ for the first operation of the user, $a_1$ for the second operation of the user, $a_2$ for the third operation of the user, and $a_3$ for the fourth operation of the user. Thus, the class number C has a value expressed by the following Equation (2).

[Math. 2]

$$C = (1-1)4^3 + (2-1)4^2 + (3-1)4^1 + (4-1)4^0 = 27$$

$$\ldots (2)$$

Furthermore, for example, it is assumed that, at another time (frame), the coordinate obtained by the first operation of the user was 685, the coordinate obtained by the second operation of the user was 852, the coordinate obtained by the third operation of the user was 346, and the coordinate obtained by the fourth operation of the user was 523. In this case, these coordinates are sorted in accordance with the magnitudes thereof, resulting in the operation history order of $a_0$ for the second operation of the user, $a_1$ for the first operation of the user, $a_2$ for the fourth operation of the user, and $a_3$ for the third operation of the user. Thus, the class number C has a value expressed by the following Equation (3).
[Math. 3]

$$C = (2-1)4^3 + (1-1)4^2 + (4-1)4^1 + (3-1)4^0 = 78$$

$$\ldots (3)$$

The class classification unit 41 calculates a class number in this manner, and supplies the class number to the prediction processing unit 42.
In the learning process, the prediction processing unit 42 reads modification information, which is the same as the modification information used by the class classification unit 41 to determine a class number, from the modification information recording unit 28, and uses the modification information as learning data. For each class number supplied from the class classification unit 41, the prediction processing unit 42 performs a predetermined prediction arithmetic operation using this learning data and the teacher data supplied from the teacher data acquisition unit 29 to calculate a prediction coefficient, and stores the prediction coefficient in the user algorithm recording unit 31.
Furthermore, in the learning result application process, the prediction processing unit 42 reads modification information, which corresponds to the operation performed by the user on an image of arbitrary content, from the modification information recording unit 28. For each class number determined by the class classification unit 41 from this modification information, the prediction processing unit 42 performs a predetermined prediction arithmetic operation using this modification information and the prediction coefficient stored in the user algorithm recording unit 31 to generate user-specific modification information, and stores the user-specific modification information in the modification information recording unit 28.
Here, if it is assumed that, for example, a linear first-order prediction arithmetic operation is employed as the predetermined prediction arithmetic operation used by the prediction processing unit 42 to calculate user-specific modification information (hereinafter appropriately referred to as a prediction value), a prediction value y is determined by the following linear first-order expression:
[Math. 4]

$$y = \sum_{n=1}^{N} w_n x_n$$

$$\ldots (4)$$

Where, in Equation (4), $x_n$ represents n-th (time) (frame) modification information which constitutes a prediction tap regarding the prediction value y, and $W_n$ represents the n-th prediction coefficient which is multiplied by the value of the n-th prediction tap. Note that in Equation (4), it is assumed that prediction taps are configured using N pieces of modification information $x_1$, $x_2$, ..., $x_N$.

Here, the prediction value y can be determined using, instead of the linear first-order expression expressed in Equation (4), a second- or higher-order expression.

Now, if the k-th (time) (frame) teacher data of the prediction value is represented by $y_k$ and in conjunction therewith the prediction value of the teacher data $y_k$, which is obtained by Equation (4), is represented by $y_k'$, then, a prediction error $e_k$ therebetween is represented by the following equation:

[Math. 5]

$$e_k = y_k - y_k'$$

$$\ldots \ (5)$$

Now, since the prediction value $y_k'$ in Equation (5) can be determined according to Equation (4), replacing $y_k'$ in Equation (5) in accordance with Equation (4) yields the following equation:

[Math. 6]

$$e_k = y_k - \left( \sum_{n=1}^{N} w_n x_{n,k} \right)$$

$$\ldots \ (6)$$

Where, in Equation (6), $x_{n,k}$ represents n-th modification information that constitutes a prediction tap regarding the k-th prediction value.

The prediction coefficient $w_n$ that allows the prediction error $e_k$ in Equation (6) (or Equation (5)) to be 0 is optimum for predicting a prediction value. However, it is generally difficult to determine such a prediction coefficient $w_n$ for prediction values at all times.

Thus, if, for example, the least-squares method is employed as a criterion indicating that the prediction coefficient $w_n$ is optimum, the optimum prediction coefficient $w_n$ can be determined by minimizing the sum total E of square errors, which is represented by the following equation:

[Math. 7]

$$E = \sum_{k=1}^{K} e_k^2$$

$$\ldots \ (7)$$

Where, in Equation (7), K represents the number of samples of sets of teacher data $y_k$ and pieces of modification information $x_{1,k}$, $x_{2,k}$, ..., $x_{N,k}$ that constitute prediction taps regarding this teacher data $y_k$ (the number of learning samples for use in learning the prediction coefficient $w_n$).

The minimum value (local minimum value) of the sum total E of square errors in Equation (7) is given by $w_n$ that allows the value obtained by partially differentiating the sum total E with the prediction coefficient $w_n$ to be 0, as expressed in Equation (8).

[Math. 8]

$$\frac{\partial E}{\partial w_n} = e_1 \frac{\partial e_1}{\partial w_n} = e_2 \frac{\partial e_2}{\partial w_n} + \cdots + e_k \frac{\partial e_k}{\partial w_n} = 0 \quad (n=1, 2 \cdots, N)$$

$$\cdots (8)$$

Thus, partially differentiating Equation (6) described above with the prediction coefficient $w_n$ yields the following equations:

[Math. 9]

$$\frac{\partial e_k}{\partial w_1} = -x_{1,k}, \frac{\partial e_k}{\partial w_2} = -x_{2,k}, \cdots, \frac{\partial e_k}{\partial w_N} = -x_{N,k}, \quad (k=1, 2 \cdots, K)$$

$$\cdots (9)$$

The equations below are obtained from Equations (8) and (9):

[Math. 10]

$$\sum_{k=1}^{K} e_k x_{1,k} = 0, \sum_{k=1}^{K} e_k x_{2,k} = 0, \cdots \sum_{k=1}^{K} e_k x_{N,k} = 0$$

$$\cdots (10)$$

By substituting Equation (6) into $e_k$ in Equation (10), Equation (10) can be represented by normal equations expressed in Equation (11).

[Math. 11]

$$\begin{bmatrix} \left( \sum_{k=1}^{K} x_{1,k}x_{1,k} \right) & \left( \sum_{k=1}^{K} x_{1,k}x_{2,k} \right) & \cdots & \left( \sum_{k=1}^{K} x_{1,k}x_{N,k} \right) \\ \left( \sum_{k=1}^{K} x_{2,k}x_{1,k} \right) & \left( \sum_{k=1}^{K} x_{2,k}x_{2,k} \right) & \cdots & \left( \sum_{k=1}^{K} x_{2,k}x_{N,k} \right) \\ \vdots & \vdots & \ddots & \vdots \\ \left( \sum_{k=1}^{K} x_{N,k}x_{1,k} \right) & \left( \sum_{k=1}^{K} x_{N,k}x_{2,k} \right) & \cdots & \left( \sum_{k=1}^{K} x_{N,k}x_{N,k} \right) \end{bmatrix} \begin{bmatrix} w_1 \\ w_2 \\ \vdots \\ w_N \end{bmatrix} = \begin{bmatrix} \left( \sum_{k=1}^{K} x_{1,k}y_k \right) \\ \left( \sum_{k=1}^{K} x_{2,k}y_k \right) \\ \vdots \\ \left( \sum_{k=1}^{K} x_{N,k}y_k \right) \end{bmatrix}$$

$$\cdots \quad (11)$$

The normal equations in Equation (11) can be solved for the prediction coefficient $w_n$ by using, for example, a sweeping-out method (Gauss-Jordan elimination method) or the like.

In the learning process, a large number of sets of teacher data $y_k$ and pieces of modification information $x_{1,k}$, $x_{2,k}$, ..., $x_{N,k}$ that constitute prediction taps regarding this teacher data $y_k$ are prepared as learning samples, and the normal equations in Equation (11) are solved for each class using the learning samples so that an optimum prediction coefficient (here, a prediction coefficient that minimizes the sum total E of square errors) $w_n$ can be determined for each class.

Then, in the learning result adaptive process, a prediction arithmetic operation in Equation (4) using this prediction coefficient is performed to determine a prediction value, that is, user-specific modification information, from the modification information.

Next, Fig. 8 is a flowchart explaining the learning process in step S11 of Fig. 3.

In step S21, in the image processing apparatus 21, a modification information recording process for recording modification information corresponding to a user operation for an image of content for use in learning is performed. In the modification information recording process, an output image that is modified in accordance with the user operation is output to the output unit 26, and in conjunction therewith modification information necessary for acquiring this output image is recorded on the modification information recording unit 28.

After the processing of the modification information acquisition process in step S21, the process proceeds to step S22. In the image processing apparatus 21, in accordance with the user operation, it is determined whether or not the user is satisfied with the output image modified using the modification information obtained in the modification information acquisition process in step S21, and the modification information acquisition process in step S21 is repeatedly performed until it has been determined that the user is satisfied with the output image.

In step S22, in a case where it is determined that the user is satisfied with the output image, the process proceeds to step S23, in which the teacher data acquisition unit 29 reads teacher data for use in learning from the medium 32 on which the content for use in learning is recorded, and supplies the teacher data to the learning unit 30. The process proceeds to step S24.

In step S24, the learning unit 30 reads the modification information recorded on the modification information recording unit 28 in the modification information acquisition process in step S21, uses this modification information as student data, and performs the prediction arithmetic operation as described above using the teacher data supplied from the teacher data acquisition unit 29 in step S23 to calculate a prediction coefficient.

After the processing of step S24, the process proceeds to step S25, in which the learning unit 30 performs the prediction arithmetic operation as described above using the modification information recorded on the modification information recording unit 28 in the modification information acquisition process in step S21 and the prediction coefficient calculated in step S24 to generate user-specific modification information. Then, the learning unit 30 records the user-specific modification information and a feature value for specifying an input image to be modified using this modification information on the modification information recording unit 28 in association with each other. The process proceeds to step S26.

In step S26, the modification information recording/reproducing unit 25 reads the user-specific modification information recorded on the modification information recording unit 28 by the learning unit 30 in step S25, and supplies the user-specific modification information to the content modification unit 24. The content modification unit 24 modifies the input image using the user-specific modification information supplied from the modification information recording/ reproducing unit 25, and outputs a resulting output image to the output unit 26.

After the processing of step S26, the process proceeds to step S27. In the image processing apparatus 21, in accordance with the user operation, it is determined whether or not the user is satisfied with the learning result, that is, whether or not the user is satisfied with the output image that is modified using the modification information obtained as a result of the prediction arithmetic operation in step S25 and that is output in step S26.

In a case where it is determined in step S27 that the user is satisfied with the learning result, the process proceeds to step S28. On the other hand, in a case where it is not determined that the user is satisfied with the learning result, the process returns to step S21, and similar processing is subsequently repeated.

In step S28, the learning unit 30 stores the prediction coefficient calculated in step S24 in the user algorithm recording unit 31. The learning process ends.

Next, Fig. 9 is a flowchart explaining the learning result application process in step S12 of Fig. 3.

In step S31, in the image processing apparatus 21, a modification information recording process for recording modification information corresponding to a user operation for an image of arbitrary content is performed. In the modification information recording process, an output image that is modified in accordance with the user operation is output to the output unit 26, and in conjunction therewith modification information necessary for acquiring this output image is recorded on the modification information recording unit 28.

After the processing of step S31, the process proceeds to step S32. In the image processing apparatus 21, it is determined whether or not modification information for a preset prescribed number of times has been recorded on the modification information recording unit 28, or whether or not the user is satisfied with the output image modified using the modification information obtained in the modification information acquisition process in step S31 in accordance with the user operation. The modification information recording process in step S31 is repeatedly performed until it has been determined that modification information for the prescribed number of times has been recorded on the modification information recording unit 28 or until it has been determined that the user is satisfied with the output image.

In a case where it is determined in step S32 that modification information for the prescribed number of times has been recorded on the modification information recording unit 28 or in a case where it is determined that the user is satisfied with the output image, the process proceeds to step S33, in which the learning unit 30 reads the modification information recorded on the modification information recording unit 28 in the modification information acquisition process in step S31, and performs the prediction arithmetic operation as described above using this modification information and the prediction coefficient stored in the user algorithm recording unit 31 to generate user-specific modification information. Then, the learning unit 30 records the user-specific modification information and a feature value for specifying an input image to be modified using this modification information on the modification information recording unit 28 in association with each other.

After the processing of step S33, the process proceeds to step S34, in which the modification information recording/reproducing unit 25 reads the user-specific modification information recorded on the modification information recording unit 28 by the learning unit 30 in step S33, and supplies the user-specific modification information to the content modification unit 24. The content modification unit 24 modifies the input image using the user-specific modification information supplied from the modification information recording/reproducing unit 25, and outputs a resulting output image to the output unit 26. The process proceeds to step S35.

In step S35, in the image processing apparatus 21, in accordance with the user operation, it is determined whether or not the user is satisfied with an output image that is obtained by modifying the input image on the basis of the user-specific modification information.

In a case where it is determined in step S35 that the user is satisfied with an output image that is obtained by modifying the input image on the basis of the user-specific modification information, the process proceeds to step S36. In the image processing apparatus 21, content to be reproduced and the user-specific modification information recorded on the user modification information recording unit 28 in step S33 are associated with each other. Accordingly, next time the user reproduces this content, the input image is modified using the user-specific modification information.

On the other hand, in a case where it is determined in step S35 that the user is not satisfied with an output image that is obtained by modifying the input image on the basis of the user-specific modification information, the process proceeds to step S37. In the image processing apparatus 21, in accordance with the user operation, it is determined whether or not the user performs the operation again to further accumulate modification information, that is, whether or not the modification information recording process is performed again.

In a case where it is determined in step S37 that the modification information recording process is not performed again, the process proceeds to step S38. On the other hand, in a case where it is determined that the modification information recording process is performed again, the process returns to step S31, and similar processing is subsequently repeated.

In step S38, in the image processing apparatus 21, content to be reproduced and, among the modification information recorded on the modification information recording unit 28, for example, modification information corresponding to the last user operation are associated with each other. Accordingly, next time the user reproduces this content, the input image is modified using the modification information corresponding to the last user operation.

After the processing of step S36 or S38, the learning result application process ends.

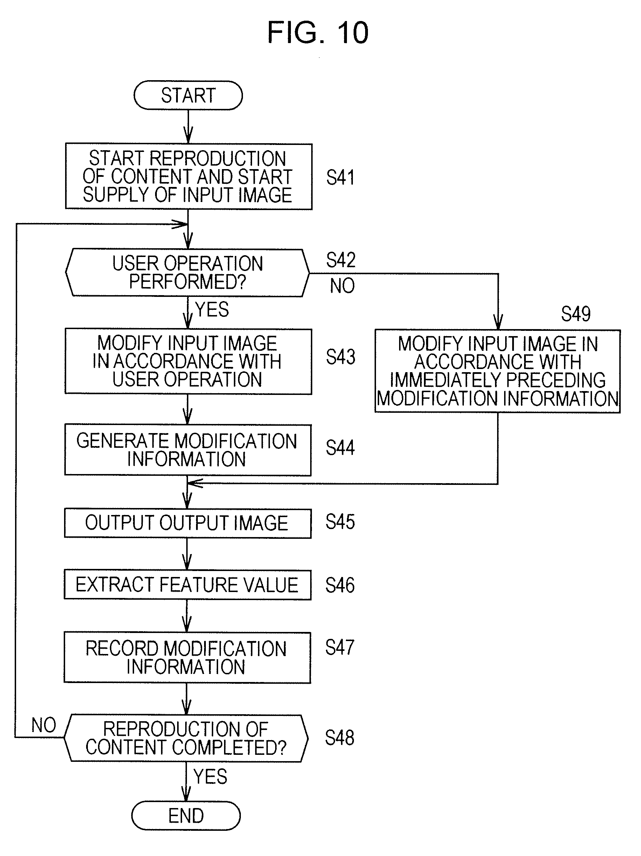

Next, Fig. 10 is a flowchart explaining the modification information recording process in step S21 of Fig. 8 or step S31 of Fig. 9. Note that in step S21 of Fig. 8, the modification information recording process is performed on an image of content for use in learning and in step S32 of Fig. 9, the modification information recording process is performed on an image of arbitrary content.

In step S41, the reproduction of content to be reproduced, which is recorded on the medium 32, is started, and the input unit 22 reads an image of the content from the medium 32, and starts to supply the input image to the content modification unit 24.

After the processing of step S41, the process proceeds to step S42, in which the content modification unit 24 determines whether or not a user operation has been performed, that is, whether or not an operation signal corresponding to a user operation has been supplied from the user operation input unit 27.

In a case where the content modification unit 24 determines in step S42 that a user operation has been performed, the process proceeds to step S43, in which the content modification unit 24 modifies the input image supplied from the input unit 22 in accordance with the user operation, that is, in accordance with the operation signal supplied from the user operation input unit 27, and acquires an output image.

After the processing of step S43, the process proceeds to step S44, in which the content modification unit 24 generates modification information about the output image acquired in step S43, and supplies this modification information to the modification information recording/reproducing unit 25. The process proceeds to step S45.

In step S45, the content modification unit 24 outputs the output image acquired in step S43 to the output unit 26, and the output unit 26 displays this output image. The process proceeds to step S46.

In step S46, the feature value extraction unit 23 extracts a feature value for specifying the input image modified by the content modification unit 24 in step S43 from this input image, and supplies this feature value to the modification information recording/reproducing unit 25. The process proceeds to step S47.

In step S47, the modification information recording/reproducing unit 25 associates the modification information supplied from the content modification unit 24 in step S44 and the feature value supplied from the feature value extraction unit 23 in step S46 with each other, and supplies the modification information and the feature value to the modification information recording unit 28 for storage.

After the processing of step S47, the process proceeds to step S48, in which the content modification unit 24 determines whether or not the reproduction of the content that has been started to be reproduced in step S41 has been completed, that is, whether or not all the images of the content have been supplied.

In a case where the content modification unit 24 determines in step S48 that the reproduction of the content has not been completed, the process returns to step S42, and similar processing is subsequently repeated.

On the other hand, in a case where the content modification unit 24 determines in step S42 that no user operation has been performed, the process proceeds to step S49.

In step S49, the content modification unit 24 modifies the input image on the basis of the modification information generated in immediately preceding step S44, and acquires an output image. Note that for a period from the start of reproduction of the content in step S41 until by the user has performed an operation, the content modification unit 24 acquires an output image on the basis of default modification information, that is, modification information that allows an output image that is the same as the input image to be acquired.

After the processing of step S49, the process proceeds to step S45, and the process described above is subsequently performed. Note that in this case, in steps S45 to S47, the output image acquired by the content modification unit 24 in step S49 and the modification information using which this output image has been acquired are used.

On the other hand, in a case where the content modification unit 24 determines in step S48 that the reproduction of the content has been completed, the process ends.

As above, in the image processing apparatus 21, learning can be performed using modification information corresponding to a user operation and teacher data to acquire a prediction coefficient for generating modification information for outputting an output image reflecting the feature of the user operation.

Then, an arithmetic operation can be performed using this expectation coefficient and the modification information corresponding to the user operation to acquire user-specific modification information, and an input image is modified using this user-specific modification information. Therefore, an output image reflecting the feature of the user operation, that is, an output image intended by the user, can be output.

That is, in a case where an input image has been modified using only modification information corresponding to a user operation, a user must repeat the operation a large number of times until an output image that the user is satisfied with has been output. However, with the use of user-specific modification information, a user can obtain an output image that the user is satisfied with only by repeating the operation a smaller number of times than conventionally. In addition, user-specific modification information can be used to obtain a more accurate output image which may not be obtained using only modification information corresponding to a user operation.

Furthermore, a prediction coefficient for generating user-specific modification information is determined by learning using a plurality of operations (operation histories) of the user, thus allowing more accurate estimation of the user's intention than the case where a prediction coefficient is determined merely using a parameter or the like selected or input by the user. Furthermore, in this manner, a prediction coefficient is determined by learning, thereby allowing a more accurate prediction coefficient to be obtained without distributing a fully automatic process over the entirety. Furthermore, a prediction coefficient can be determined using a less expensive apparatus than an apparatus incorporating a fully automatic process, and a prediction coefficient with high robustness to processes can also be determined.

Note that the present invention can be applied to, as well as the image processing apparatus 21, for example, an information processing apparatus that modifies control information for controlling, for example, a device that repeatedly performs a predetermined operation, such as a crane, in accordance with a user operation.

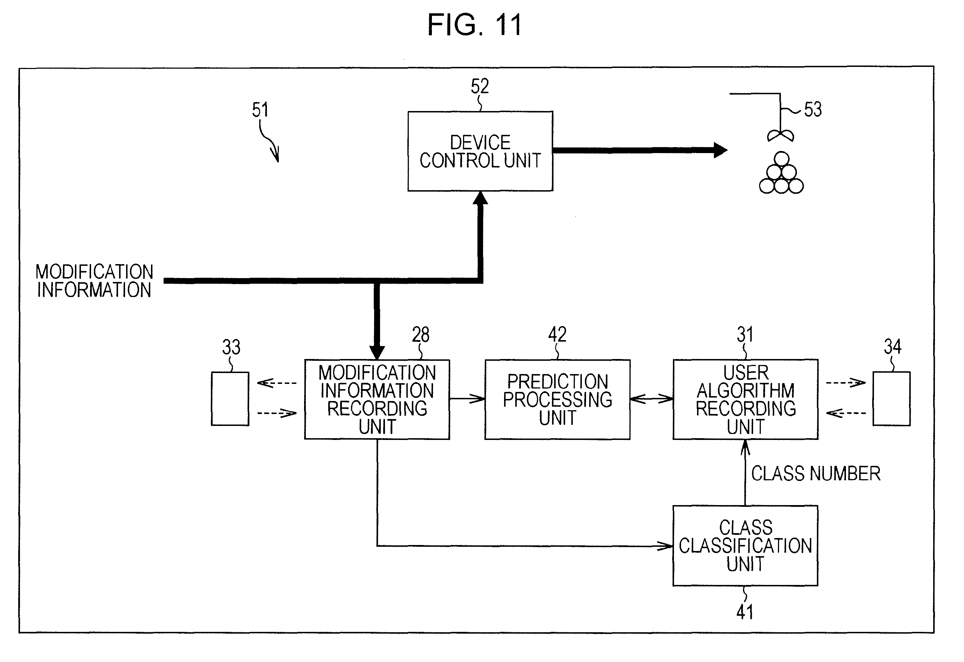

That is, Figs. 11 to 13 are block diagrams illustrating an example configuration of an embodiment of an information processing apparatus to which the present invention is applied.

In Figs. 11 to 13, an information processing apparatus 51 is configured using a modification information recording unit 28, a user algorithm recording unit 31, a class classification unit 41, a prediction processing unit 42, a device control unit 52, and a control target device 53. Note that in Figs. 11 to 13, portions corresponding to those of the image processing apparatus 21 of Fig. 2 are assigned the same numerals, and explanation thereof will be appropriately omitted hereinafter.

That is, the information processing apparatus 51 of Figs. 11 to 13 is common to the image processing apparatus 21 of Fig. 2 in that it includes the modification information recording unit 28, the user algorithm recording unit 31, the class classification unit 41, and the prediction processing unit 42. However, the information processing apparatus 51 is different from the image processing apparatus 21 in that it includes the device control unit 52 and the control target device 53.

Modification information corresponding to a user operation is supplied to the device control unit 52. The device control unit 52 generates control information for controlling the control target device 53 on the basis of the modification information corresponding to the user operation, and supplies the control information to the control target device 53.

Furthermore, user-specific modification information that is determined by an arithmetic operation using a prediction coefficient obtained by learning and modification information corresponding to a user operation is supplied to the device control unit 52 from the prediction processing unit 42. The device control unit 52 generates control information for controlling the control target device 53 on the basis of the user-specific modification information, and supplies the control information to the control target device 53.

The control target device 53 is, for example, a game device using a crane, an actual crane machine, or the like, and operates in accordance with the control information supplied from the device control unit 52.

In the information processing apparatus 51 configured in this manner, as illustrated in Fig. 11, the modification information corresponding to the user operation is supplied to the device control unit 52 and the modification information recording unit 28. The modification information recording unit 28 accumulates this modification information. The device control unit 52 generates control information for controlling the control target device 53 on the basis of this modification information, and supplies the control information to the control target device 53. The control target device 53 operates in accordance with the control information from the device control unit 52.

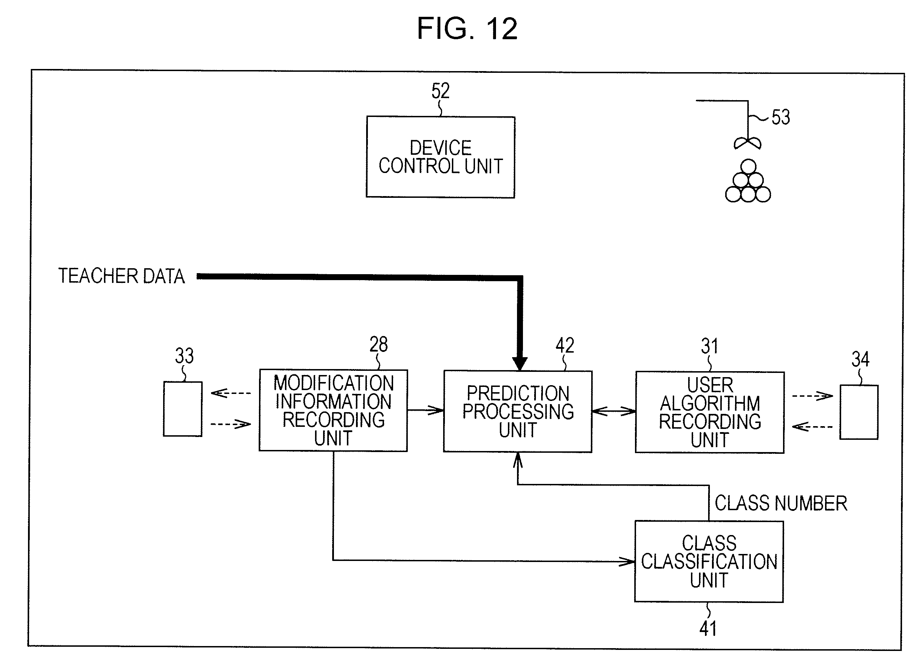

Then, when modification information for a predetermined number of times is accumulated in the modification information recording unit 28, as illustrated in Fig. 12, teacher data that is prepared in advance (for example, modification information corresponding to an operation of a skilled operator), the modification information accumulated in the modification information recording unit 28, and a class number that is determined by the class classification unit 41 using the modification information accumulated in the modification information recording unit 28 are supplied to the prediction processing unit 42. The prediction processing unit 42 performs the prediction arithmetic operation as described above to generate a prediction coefficient for generating user-specific modification information, and stores the prediction coefficient in the user algorithm recording unit 31.

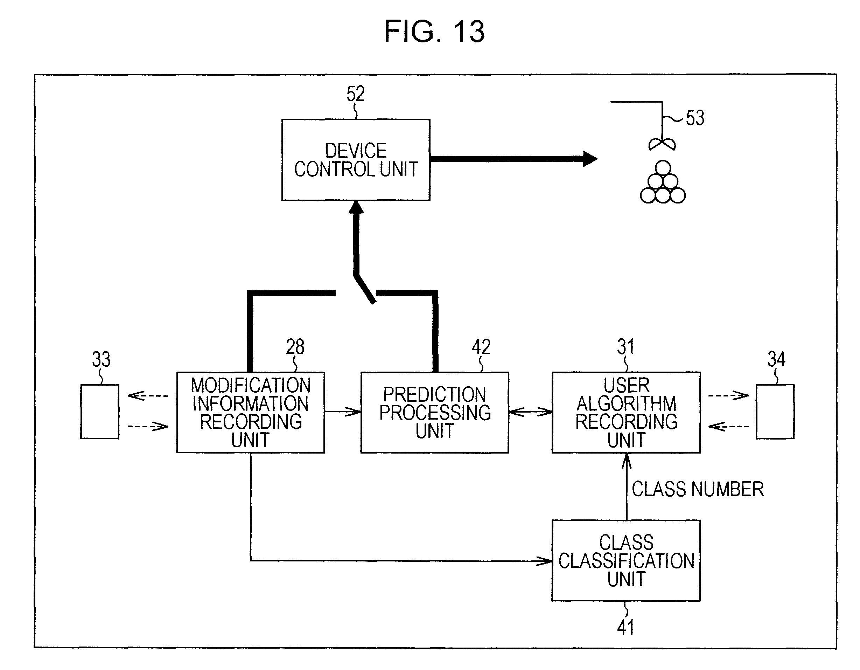

Thereafter, the prediction processing unit 42 performs the prediction arithmetic operation as described above using the prediction coefficient recorded on the user algorithm recording unit 31 and the modification information recorded on the modification information recording unit 28 to generate user-specific modification information. Then, as illustrated in Fig. 13, the prediction processing unit 42 supplies the user-specific modification information to the device control unit 52. The device control unit 52 generates control information for controlling the control target device 53 on the basis of the user-specific modification information, and supplies the control information to the control target device 53. The control target device 53 operates in accordance with the control information.

Furthermore, the modification information to be supplied to the device control unit 52 can be switched in accordance with the user operation, and the modification information stored in the modification information recording unit 28 can also be supplied to the device control unit 52.

In addition, the present invention can be applied to, as well as the image processing apparatus 21 or the information processing apparatus 51, for example, an apparatus capable of accumulating modification information corresponding to user operations, such as an automobile, an aircraft, a radio controlled toy (so-called RC), or a household electric appliance.

Note that the teacher data used in the learning process may also be implemented using, as well as a coordinate read from content for use in learning, for example, a coordinate that is determined by the teacher data acquisition unit 29 by tracking the subject in an input image.

Furthermore, in the present embodiment, explanation has been given of learning utilizing the least-squares method. However, for example, learning utilizing a neural network can be used, as well as learning utilizing the least-squares method.

For example, in learning utilizing a neural network, an arithmetic operation utilizing a non-linear transfer function is performed using modification information corresponding to a user operation and teacher data for use in learning, thereby determining a coupling coefficient representing the coupling strength between nodes in the neural network. Then, this coupling coefficient and the modification information corresponding to the user operation are used to perform an arithmetic operation utilizing a non-linear transfer function, thereby determining user-specific modification information.

The series of processes described above can be executed by hardware or software. In a case where the series of processes is executed by software, a program constituting this software is installed into a computer incorporated in dedicated hardware or a computer that can execute various functions by installing therein various programs, for example, a general-purpose personal computer or the like, from a program recording medium.

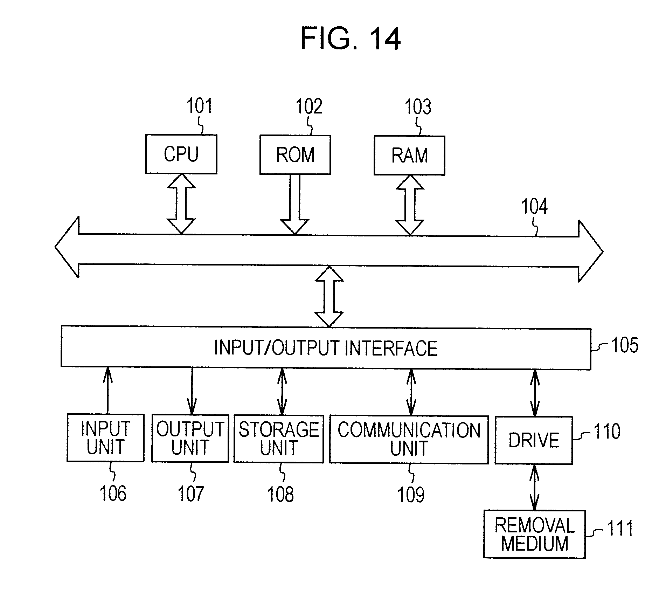

Fig. 14 is a block diagram illustrating an example configuration of hardware of a computer that executes the series of processes described above using a program.

In the computer, a CPU (Central Processing Unit) 101, a ROM (Read Only Memory) 102, and a RAM (Random Access Memory) 103 are connected to one another via a bus 104.

An input/output interface 105 is further connected to the bus 104. The input/output interface 105 is connected to an input unit 106 composed of a keyboard, a mouse, a microphone, and the like, an output unit 107 composed of a display, speakers, and the like, a storage unit 108 composed of a hardware, a nonvolatile memory, and the like, a communication unit 109 composed of a network interface and the like, and a drive 110 that drives a removable medium 111 such as a magnetic disk, an optical disk, a magneto-optical disk, or a semiconductor memory.

In the computer configured as above, the CPU 101 loads the program stored in, for example, the storage unit 108 into the RAM 103 via the input/output interface 105 and the bus 104 and executes the program, thereby performing the series of processes described above.

The program executed by the computer (CPU 101) is provided by being recorded on, for example, the removable medium 111, which is a package medium composed of a magnetic disk (including a flexible disk), an optical disk (such as a CD-ROM (Compact Disc-Read Only Memory) or a DVD (Digital Versatile Disc)), a magneto-optical disk, or a semiconductor memory, or via a wired or wireless transmission medium such as a local area network, the Internet, or digital satellite broadcasting.

Then, the program can be installed into the storage unit 108 via the input/output interface 105 by placing the removable medium 111 in the drive 110. Furthermore, the program can be received by the communication unit 109 via a wired or wireless transmission medium and loaded into the storage unit 108. Besides that, the program can be installed into the ROM 102 or the storage unit 108 in advance.

Note that the program executed by the computer may be a program for which processes are performed in a time series manner in the order explained in this specification or may be a program for which processes are performed in parallel or at a necessary timing such as when a process is called.

Note that the respective processes explained with reference to the flowcharts described above may not necessarily be processed in a time series manner in the order described in the flowcharts, and also include processes that are executed in parallel or individually (for example, parallel processes or object-based processes). Furthermore, the program may be processed by a single CPU or may be processed by a plurality of CPUs in a distributed fashion.

Furthermore, embodiments of the present invention are not limited to the embodiment described above, and a variety of modifications can be made without departing from the scope of the present invention.

**Claims**

1. A learning apparatus that learns a feature of an operation of a user on the basis of a history of a plurality of operations performed by the user, comprising:

modifying means for modifying predetermined input information in accordance with the operation of the user;
generating means for generating modification information necessary for outputting output information obtained as a result of the predetermined input information having been modified by the modifying means;
accumulating means for accumulating a plurality of pieces of the modification information corresponding to the number of times the user performs the operation; and
learning means for performing learning using the plurality of pieces of modification information accumulated in the accumulating means as student data which serves as students of learning and using predetermined information obtained on the basis of the predetermined input information as teacher data which serves as a teacher of learning, thereby calculating a prediction coefficient representing the feature of the operation of the user.

2. The learning apparatus according to Claim 1, further comprising class classifying means for classifying the modification information into predetermined classes on the basis of values of the plurality of pieces of modification information accumulated in the accumulating means,
wherein the learning means performs learning using the student data and the teacher data for each of the classes classified by the class classifying means.

3. A learning method for learning a feature of an operation of a user on the basis of a history of a plurality of operations performed by the user, comprising the steps of:

modifying predetermined input information in accordance with the operation of the user;
generating modification information necessary for outputting output information obtained as a result of the predetermined input information having been modified;
accumulating in accumulating means a plurality of pieces of the modification information corresponding to the number of times the user performs the operation; and
performing learning using the plurality of pieces of modification information accumulated in the accumulating means as student data which serves as students of learning and using predetermined information obtained on the basis of the predetermined input information as teacher data which serves as a teacher of learning, thereby calculating a prediction coefficient representing the feature of the operation of the user.

4. A program for causing execution by a computer of a learning apparatus that learns a feature of an operation of a user on the basis of a history of a plurality of operations performed by the user, the program causing the computer to execute a process comprising the steps of:

modifying predetermined input information in accordance with the operation of the user;
generating modification information necessary for outputting output information obtained as a result of the predetermined input information having been modified;
accumulating in accumulating means a plurality of pieces of the modification information corresponding to the number of times the user performs the operation; and
performing learning using the plurality of pieces of modification information accumulated in the accumulating means as student data which serves as students of learning and using predetermined information obtained on the basis of the predetermined input information as teacher data which serves as a teacher of learning, thereby calculating a prediction coefficient representing the feature of the operation of the user.

5. An information modification apparatus that modifies predetermined input information and that outputs resulting output information, comprising:

prediction coefficient storage means for storing a prediction coefficient obtained by learning performed in advance;
modifying means for modifying the predetermined input information in accordance with an operation of the user;
generating means for generating modification information necessary for outputting the output information obtained as a result of the predetermined input information having been modified by the modifying means;
accumulating means for accumulating a plurality of pieces of the modification information corresponding to the number of times the user performs the operation; and
arithmetic operation means for performing a predetermined arithmetic operation using the prediction coefficient stored in the prediction coefficient storage means and the plurality of pieces of modification information accumulated in the accumulating means to calculate modification information reflecting a feature of the operation of the user,
wherein the modifying means modifies the predetermined input information on the basis of the modification information reflecting a feature of the operation of the user.

6. The information modification apparatus according to Claim 5, further comprising class classifying means for classifying the modification information into predetermined classes on the basis of values of the plurality of pieces of modification information accumulated in the accumulating means,
wherein the arithmetic operation means performs an arithmetic operation using the prediction coefficient and the modification information for each of the classes classified by the class classifying means.

7. An information modification method for an information modification apparatus that modifies predetermined input information and that outputs resulting output information,
the information modification apparatus including

prediction coefficient storage means for storing a prediction coefficient obtained by learning performed in advance, and
accumulating means for accumulating information, the information modification method comprising the steps of: modifying the predetermined input information in accordance with an operation of the user;
generating modification information necessary for outputting the output information obtained as a result of the predetermined input information having been modified;
accumulating in the accumulating means a plurality of pieces of the modification information corresponding to the number of times the user performs the operation;
performing a predetermined arithmetic operation using the prediction coefficient stored in the prediction coefficient storage means and the plurality of pieces of modification information accumulated in the accumulating means to calculate modification information reflecting a feature of the operation of the user; and
modifying the predetermined input information on the basis of the modification information reflecting a feature of the operation of the user.

8. A program for causing execution by a computer of an information modification apparatus that modifies predetermined input information and that outputs resulting output information,
the information modification apparatus including

prediction coefficient storage means for storing a prediction coefficient obtained by learning performed in advance, and
accumulating means for accumulating information,

the program causing the computer to execute a process comprising the steps of:

modifying the predetermined input information in accordance with an operation of the user;
generating modification information necessary for outputting the output information obtained as a result of the predetermined input information having been modified;
accumulating in the accumulating means a plurality of pieces of the modification information corresponding to the number of times the user performs the operation;
performing a predetermined arithmetic operation using the prediction coefficient stored in the prediction coefficient storage means and the plurality of pieces of modification information accumulated in the accumulating means to calculate modification information reflecting a feature of the operation of the user; and
modifying the predetermined input information on the basis of the modification information reflecting a feature of the operation of the user.

# FIG. 1

IN RECORDING MODE

15

INPUT IMAGE

12
CONTENT
MODIFICATION
UNIT

OUTPUT IMAGE
(MODIFICATION RESULT)

14

INPUT IMAGE
FEATURE VALUE

CONTENT
MODIFICATION
INFORMATION

MODIFICATION INFORMATION
RECORDING/REPRODUCING UNIT

13

USER
(OPERATOR)

OPERATION
SIGNAL

11

IN REPRODUCTION MODE

15

INPUT IMAGE

12
CONTENT
MODIFICATION
UNIT

OUTPUT IMAGE
(MODIFICATION RESULT)

14

INPUT IMAGE
FEATURE VALUE

CONTENT
MODIFICATION
INFORMATION

MODIFICATION INFORMATION
RECORDING/REPRODUCING UNIT

13

USER
(VIEWER)

11

# FIG. 2

INPUT IMAGE

OUTPUT IMAGE

32

24

INPUT UNIT

22

23

FEATURE VALUE
EXTRACTION UNIT

CONTENT
MODIFICATION UNIT

OUTPUT
UNIT

26

USER
OPERATION
INPUT UNIT

27

TEACHER DATA
ACQUISITION
UNIT

29

MODIFICATION INFORMATION
RECORDING/REPRODUCING UNIT

25

28

31

33

MODIFICATION
INFORMATION
RECORDING UNIT

USER ALGORITHM
RECORDING UNIT

34

LEARNING
UNIT

30

21

# FIG. 3

START

↓

| LEARNING PROCESS | S11 |

↓

| LEARNING RESULT APPLICATION PROCESS | S12 |

↓

END

# FIG. 4

## FIG. 5

# FIG. 6

EP 2 154 637 A1

# FIG. 7

28
MODIFICATION
INFORMATION
RECORDING UNIT

31
USER ALGORITHM
RECORDING UNIT

CLASS
CLASSIFICATION
UNIT
41

42
PREDICTION
PROCESSING
UNIT

29
TEACHER DATA
ACQUISITION UNIT

30

# FIG. 8

START

| MODIFICATION INFORMATION RECORDING PROCESS | S21 |

SATISFIED WITH OUTPUT IMAGE? — NO → S22

YES

| READ TEACHER DATA | S23 |

| CALCULATE PREDICTION COEFFICIENT | S24 |

| GENERATE USER-SPECIFIC MODIFICATION INFORMATION USING PREDICTION COEFFICIENT | S25 |

| OUTPUT LEARNING RESULT | S26 |

SATISFIED WITH LEARNING RESULT? — NO → S27

YES

| STORE PREDICTION COEFFICIENT | S28 |

END

# FIG. 9

```
                    START

                      │
                      ▼
        ┌─────────────────────────────┐
        │  MODIFICATION INFORMATION   │   S31
        │     RECORDING PROCESS       │
        └─────────────────────────────┘
                      │
                      ▼
         ╱────────────────────────────╲
   NO   ╱  MODIFICATION INFORMATION    ╲
◄──────╱  FOR PRESCRIBED NUMBER OF      ╲  S32
       ╲  TIMES RECORDED OR SATISFIED   ╱
        ╲    WITH OUTPUT IMAGE?        ╱
         ╲────────────────────────────╱
                      │ YES
                      ▼
        ┌─────────────────────────────┐
        │   GENERATE USER-SPECIFIC    │   S33
        │   MODIFICATION INFORMATION  │
        │  USING PREDICTION COEFFICIENT│
        └─────────────────────────────┘
                      │
                      ▼
        ┌─────────────────────────────┐
        │      OUTPUT OUTPUT IMAGE    │   S34
        │  MODIFIED USING USER-SPECIFIC│
        │    MODIFICATION INFORMATION  │
        └─────────────────────────────┘
                      │
                      ▼              S35
        ╱─────────────────────────╲
        ╲ SATISFIED WITH OUTPUT IMAGE? ╱──────┐
         ╲───────────────────────╱  YES       │
                      │ NO                     │
   YES  ╱──────────────────────╲               │
 ◄─────╱ PERFORM OPERATION AGAIN? ╲  S37        │
       ╲──────────────────────╱                │
                      │ NO                     │  S36
                      │                        ▼
                      │       ┌────────────────────────────────┐
                      │       │   ASSOCIATE USER-SPECIFIC      │
                      │       │   MODIFICATION INFORMATION     │
                      │       │      AND CONTENT TO BE         │
                      │       │ REPRODUCED WITH EACH OTHER     │
                      │       └────────────────────────────────┘
                      ▼                        │
        ┌─────────────────────────────┐        │
        │    ASSOCIATE MODIFICATION   │        │
        │  INFORMATION BASED ON LAST  │   S38   │
        │    USER OPERATION AND       │        │
        │  CONTENT TO BE REPRODUCED   │        │
        │      WITH EACH OTHER        │        │
        └─────────────────────────────┘        │
                      │◄───────────────────────┘
                      ▼
                    END
```

# FIG. 10

```
                    ┌─────────────┐
                    (   START     )
                    └─────────────┘
                           │
                           ▼
         ┌──────────────────────────┐
         │ START REPRODUCTION       │
         │ OF CONTENT AND START     │  S41
         │ SUPPLY OF INPUT IMAGE    │
         └──────────────────────────┘
                           │
                           ▼
              ┌──────────────────────┐  S42
              │  USER OPERATION      │────────────────┐
              │  PERFORMED?          │  NO            │
              └──────────────────────┘               │
                           │ YES                      │         S49
                           ▼                          ▼
         ┌──────────────────────┐     ┌───────────────────────────────┐
         │ MODIFY INPUT IMAGE   │     │ MODIFY INPUT IMAGE IN         │
         │ IN ACCORDANCE WITH   │ S43 │ ACCORDANCE WITH               │
         │ USER OPERATION       │     │ IMMEDIATELY PRECEDING         │
         └──────────────────────┘     │ MODIFICATION INFORMATION      │
                           │          └───────────────────────────────┘
                           ▼                          │
         ┌──────────────────────┐                     │
         │ GENERATE MODIFICATION│ S44                 │
         │ INFORMATION          │◄────────────────────┘
         └──────────────────────┘
                           │
                           ▼
         ┌──────────────────────┐
         │ OUTPUT OUTPUT IMAGE  │ S45
         └──────────────────────┘
                           │
                           ▼
         ┌──────────────────────┐
         │ EXTRACT FEATURE VALUE│ S46
         └──────────────────────┘
                           │
                           ▼
         ┌──────────────────────┐
         │ RECORD MODIFICATION  │ S47
         │ INFORMATION          │
         └──────────────────────┘
                           │
                           ▼
    NO        ┌──────────────────────┐
    ◄─────────│ REPRODUCTION OF      │ S48
              │ CONTENT COMPLETED?   │
              └──────────────────────┘
                           │ YES
                           ▼
                    ┌─────────────┐
                    (    END      )
                    └─────────────┘
```

# FIG. 11

EP 2 154 637 A1

## FIG. 12

EP 2 154 637 A1

# FIG. 13

EP 2 154 637 A1

# FIG. 14

EP 2 154 637 A1

## INTERNATIONAL SEARCH REPORT

| | International application No. |
|---|---|
| | PCT/JP2008/059767 |

A. CLASSIFICATION OF SUBJECT MATTER
*G06N3/00*(2006.01)i, *G06T11/80*(2006.01)i, *G09B5/06*(2006.01)i, *H04N5/91* (2006.01)i

According to International Patent Classification (IPC) or to both national classification and IPC

B. FIELDS SEARCHED

Minimum documentation searched (classification system followed by classification symbols)
G06N3/00, G06T11/80, G09B5/06, H04N5/91

Documentation searched other than minimum documentation to the extent that such documents are included in the fields searched
Jitsuyo Shinan Koho           1922-1996   Jitsuyo Shinan Toroku Koho   1996-2008
Kokai Jitsuyo Shinan Koho     1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2003/071479 A1  (Sony Corp.), 28 August, 2003 (28.08.03), Page 21, line 3 to page 43, line 22 & US 2005/0007159 A1   & EP 1477929 A1 & EP 1887514 A          & CN 1533551 A | 1-8 |
| A | JP 2003-316760 A  (Sony Corp.), 07 November, 2003 (07.11.03), Par. Nos. [0151] to [0283] & US 2004/0234160 A1   & WO 2003/092283 A1 & EP 1501295 A1          & CN 1545809 A | 1-8 |
| A | JP 2005-111249 A  (Konica Minolta Medical & Graphic, Inc.), 28 April, 2005 (28.04.05), Par. Nos. [0116] to [0171] & US 2005/0008206 A1 | 1-8 |

☒ Further documents are listed in the continuation of Box C.  ☐ See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 01 August, 2008 (01.08.08) | 12 August, 2008 (12.08.08) |

| Name and mailing address of the ISA/ Japanese Patent Office | Authorized officer |
|---|---|
| Facsimile No. | Telephone No. |

Form PCT/ISA/210 (second sheet) (April 2007)

**EP 2 154 637 A1**

**INTERNATIONAL SEARCH REPORT**

| International application No. |
| --- |
| PCT/JP2008/059767 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 11-27535 A  (Dainippon Screen Mfg. Co., Ltd.), 29 January, 1999 (29.01.99), Par. Nos. [0020] to [0069] & US 6229625 B1 | 1-8 |

Form PCT/ISA/210 (continuation of second sheet) (April 2007)

32

**EP 2 154 637 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006270187 A